(19) Europäisches Patentamt / European Patent Office / Office européen des brevets

(11) **EP 4 144 794 B1**

(12) **EUROPEAN PATENT SPECIFICATION**

(45) Date of publication and mention
of the grant of the patent:
**28.01.2026 Bulletin 2026/05**

(21) Application number: **22193430.0**

(22) Date of filing: **01.09.2022**

(51) International Patent Classification (IPC):
*C08L 23/10* (2006.01)

(52) Cooperative Patent Classification (CPC):
(C-Sets available)
**C08L 23/10;** C08L 2203/202          (Cont.)

(54) **POLYOLEFIN RESIN COMPOSITION WITH HIGH RESISTANCE TO TRACKING AND ARTICLE MOLDED THEREFROM**

POLYOLEFINHARZZUSAMMENSETZUNG MIT HOHER KRIECHSTROMFESTIGKEIT UND DARAUS GEFORMTER ARTIKEL

COMPOSITION DE RÉSINE DE POLYOLÉFINE À HAUTE RÉSISTANCE AU CHEMINEMENT ET ARTICLE MOULÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2021 KR 20210118276**

(43) Date of publication of application:
**08.03.2023 Bulletin 2023/10**

(73) Proprietor: **Hanwha TotalEnergies Petrochemical Co., Ltd.**
**Seosan-si, Chungcheongnam-do 31900 (KR)**

(72) Inventors:
• **CHOI, Joonhyeong**
**31900 Chungcheongnam-do (KR)**
• **CHUN, YongSung**
**31900 Chungcheongnam-do (KR)**
• **LEE, Eunwoong**
**31900 Chungcheongnam-do (KR)**

(74) Representative: **HGF**
**HGF Limited**
**4th Floor, 1 City Square**
**Leeds LS1 2AL (GB)**

(56) References cited:
EP-A1- 2 202 271          JP-A- 2007 106 851
KR-A- 20180 093 808

(52)  Cooperative Patent Classification (CPC): (Cont.)

C-Sets
**C08L 23/10, C08K 3/22, C08L 23/16, C08K 3/04**

## Description

## Technical Field

The present invention relates to a polyolefin resin composition with high resistance to tracking and to an article molded therefrom. Specifically, the present invention relates to a non-crosslinked polyolefin resin composition suitable for high-capacity outdoor power cables by virtue of excellent mechanical properties, thermal resistance, and tracking resistance, and to an article molded therefrom.

## Background Art of the Invention

Outdoor power cables are a generic term for electric wires used outdoors. They are electric wires with a simple structure in which a conductor is sheathed with a single layer that has both insulation and sheathing functions unlike power cables for underground distribution.

Since outdoor power cables are exposed to the outdoor environment for a long period of time, they are basically exposed to rain, wind, contaminants, and the like. Further, due to the nature of Korea's topography, they may be used in mountainous terrain with a lot of contact with trees or coastal terrain with a lot of sea fog. If continuous power transmission is conducted in a state of being contaminated by moisture, salt, contaminants, and the like, the current is likely to leak through the sheath, and the heat thus generated may form a local dry zone. An electric field is concentrated on such a dry zone to start a discharge, which causes continuously repeated carbonization of the sheathing material to form a carbonized conductive track, which eventually leads to dielectric breakdown that is called a tracking phenomenon.

In Korea, there are many densely populated areas and mountainous areas. In order to prevent accidents and fires caused by tracking of outdoor power cables, the tracking resistance of outdoor power cables must be excellent. In order to enhance the tracking resistance, a tracking-suppression-type outdoor cable has been developed in which a sheath is added to the structure of general outdoor power cables.

Conventionally, a low-density polyethylene, an ethylene-propylene rubber copolymer (EPR), an ethylene-propylene-diene rubber copolymer (EPDM), or the like is used as crosslinked as a sheathing material for the tracking-suppression-type outdoor power cables. However, in the case of crosslinked polyethylene, EPR, or EPDM, it cannot be recycled when the lifespan of a product has expired. Since it has to be incinerated, it is not environmentally friendly.

In recent years, research on polypropylene, which has superior thermal resistance to polyethylene and can be recycled even after its lifespan has expired since it is used in a non-crosslinked form, is being actively conducted. However, polypropylene has poor flexibility and impact strength due to its high stiffness. In addition, in order to enhance tracking resistance, various metal oxides such as aluminum hydroxide, magnesium hydroxide, and antimony trioxide are added as a tracking inhibitor to polypropylene. The high crystallinity of polypropylene reduces the compatibility with these additives, which is a factor that impairs mechanical durability. Accordingly, an improvement thereon is required.

## Disclosure of the Invention

## Technical Problem to Solve

An object of the present invention is to provide a non-crosslinked polyolefin resin composition suitable for high-capacity outdoor power cables by virtue of excellent mechanical properties, thermal resistance, and tracking resistance.

Another object of the present invention is to provide an article prepared from the polyolefin resin composition and having excellent mechanical properties, thermal resistance, and tracking resistance.

## Solution to the Problem

According to an embodiment of the present invention for accomplishing the above object, there is provided a polyolefin resin composition, which comprises (A) a base resin comprising, based on the total weight of components (A-1) and (A-2), (A-1) 60 to 90% by weight of a propylene homopolymer or an ethylene-propylene random copolymer; and (A-2) 10 to 40% by weight of an ethylene-$\alpha$-olefin rubber copolymer; and, relative to 100 parts by weight of the base resin (A), (B) 10 to 50 parts by weight of a hydrated metal compound; and (C) 0.5 to 3.0 parts by weight of carbon black, wherein the ethylene content in component (A-1) is 0 to 2.5% by weight, the base resin (A) has a melting temperature (Tm) of 147 to 165°C and a melt index of 0.5 to 6.0 g/10 minutes when measured at 230°C under a load of 2.16 kg, and when the base resin (A) is extracted at room temperature with a xylene solvent, the extract has an intrinsic viscosity of 1.5 to 4.0 dl/g.

In a specific embodiment of the present invention, the base resin (A) may be obtained by polymerization of components (A-1) and (A-2) in stages in reactors or by separate polymerization and then mixing thereof.

In a specific embodiment of the present invention, the $\alpha$-olefin of component (A-2) may have 3 to 8 carbon atoms.

3

In a preferred embodiment of the present invention, the $\alpha$-olefin of component (A-2) may comprise at least one selected from the group consisting of propylene, 1-butene, 1-hexene, and 1-octene.

In a specific embodiment of the present invention, the melting temperature (Tm) of the base resin (A) may be 148 to 155°C.

In a specific embodiment of the present invention, the melt index of the base resin (A) may be 0.8 to 5.0 g/10 minutes when measured at 230°C under a load of 2.16 kg.

In a specific embodiment of the present invention, when the base resin (A) is extracted at room temperature with a xylene solvent, the intrinsic viscosity of the extract may be 2.0 to 3.3 dl/g.

In a specific embodiment of the present invention, the hydrated metal compound (B) may comprise at least one selected from the group consisting of aluminum hydroxide ($Al(OH)_3$), magnesium hydroxide ($Mg(OH)_2$), and calcium hydroxide ($Ca(OH)_2$).

In a specific embodiment of the present invention, the carbon black (C) may comprise at least one selected from the group consisting of acetylene black, thermal black, furnace black, and channel black.

The polyolefin resin composition according to an embodiment of the present invention may further comprise at least one additive (D) selected from the group consisting of an antioxidant, a neutralizer, a UV stabilizer, a long-term heat stabilizer, a slip agent, an anti-blocking agent, a reinforcing agent, a filler, a weathering stabilizer, an antistatic agent, a lubricant, a nucleating agent, a pigment, and a dye.

Here, the additive (D) may be added in an amount of 0.3 to 3.0 parts by weight relative to 100 parts by weight of the base resin (A).

According to another embodiment of the present invention, there is provided a polyolefin resin article molded from the polyolefin resin composition.

In a specific embodiment of the present invention, the polyolefin resin article may have a tracking generation time of 100 minutes or longer.

In a specific embodiment of the present invention, the polyolefin resin article may have an elongation of 300% or more.

In a specific embodiment of the present invention, the polyolefin resin article may be a sheath layer of a high-voltage outdoor power cable.

Effects of the Invention

The polyolefin resin composition according to the embodiment of the present invention has excellent thermal resistance and mechanical durability and has excellent elongation even when a large amount of a tracking inhibitor is mixed. Accordingly, the polyolefin resin composition according to the embodiment of the present invention can be advantageously used for outdoor power cables with excellent tracking resistance and an increase in power transmission capacity.

**Brief Description of the Drawings**

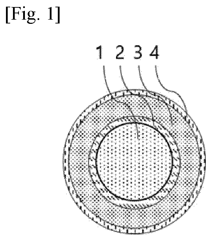

Fig. 1 is a cross-sectional view showing the structure of a high-voltage outdoor power cable.

**Detailed Description for Carrying out the Invention**

Hereinafter, the present invention will be described in more detail.

**Polyolefin resin composition**

The polyolefin resin composition according to an embodiment of the present invention comprises (A) a base resin comprising, based on the total weight of components (A-1) and (A-2), (A-1) 60 to 90% by weight of a propylene homopolymer or an ethylene-propylene random copolymer; and (A-2) 10 to 40% by weight of an ethylene-$\alpha$-olefin rubber copolymer; and, relative to 100 parts by weight of the base resin (A), (B) 10 to 50 parts by weight of a hydrated metal compound; and (C) 0.5 to 3.0 parts by weight of carbon black.

**(A) Base resin**

The polyolefin resin composition according to an embodiment of the present invention comprises a base resin (A) comprising (A-1) 60 to 90% by weight of a propylene homopolymer or an ethylene-propylene random copolymer; and (A-2) 10 to 40% by weight of an ethylene-$\alpha$-olefin rubber copolymer, based on the total weight of components (A-1) and (A-2).

(A-1) Propylene homopolymer or an ethylene-propylene random copolymer

In the polyolefin resin composition according to an embodiment of the present invention, the base resin (A) comprises a propylene homopolymer or an ethylene-propylene random copolymer (A-1).

Here, the propylene homopolymer may be a polymer obtained by polymerization of a propylene monomer substantially alone.

There is no particular limitation to the method of preparing the propylene homopolymer. Any method of preparing a propylene homopolymer known in the art to which the present invention pertains may be used as it is or appropriately modified. For example, a bulk polymerization method, a solution polymerization method, a slurry polymerization method, a gas phase polymerization method, or the like may be used. Further, either a batch type or a continuous type is possible.

The ethylene-propylene random copolymer may be a copolymer in which an ethylene monomer and a propylene monomer are randomly copolymerized.

There is no particular limitation to the method of preparing the ethylene-propylene random copolymer. Any method of preparing an ethylene-propylene random copolymer known in the art to which the present invention pertains may be used as it is or appropriately modified. For example, a bulk polymerization method, a solution polymerization method, a slurry polymerization method, a gas phase polymerization method, or the like may be used. Further, either a batch type or a continuous type is possible.

In the polyolefin resin composition according to an embodiment of the present invention, the base resin (A) comprises the propylene homopolymer or ethylene-propylene random copolymer (A-1) in an amount of 60 to 90% by weight based on the total weight of components (A-1) and (A-2). If the content of the propylene homopolymer or ethylene-propylene random copolymer (A-1) is less than 60% by weight, the thermal resistance of a molded article may be deteriorated. If the content of the propylene homopolymer or ethylene-propylene random copolymer (A-1) exceeds 90%, a molded article may have high rigidity and may be deteriorated in elongation, flexibility, and impact resistance.

In a specific embodiment of the present invention, the content of ethylene in the propylene homopolymer or ethylene-propylene random copolymer (A-1) is 0 to 2.5% by weight. If the ethylene content exceeds 2.5% by weight, the thermal resistance of a molded article may be deteriorated, and it may be difficult to enhance tracking resistance and power transmission capacity.

(A-2) Ethylene-α-olefin rubber copolymer

In the polyolefin resin composition according to an embodiment of the present invention, the base resin (A) comprises an ethylene-α-olefin rubber copolymer (A-2). The ethylene-α-olefin rubber copolymer (A-2) may serve to improve the softness of a molded article.

In a specific embodiment of the present invention, the α-olefin of the ethylene-α-olefin rubber copolymer (A-2) may have 3 to 8 carbon atoms.

In a preferred embodiment of the present invention, the α-olefin of the ethylene-α-olefin rubber copolymer (A-2) may comprise at least one selected from the group consisting of propylene, 1-butene, 1-hexene, and 1-octene. Preferably, the ethylene-α-olefin rubber copolymer (A-2) may be an ethylene-propylene rubber copolymer.

In a preferred embodiment of the present invention, the ethylene-α-olefin rubber copolymer (A-2) may be subjected to polymerization of the propylene homopolymer or ethylene-propylene random copolymer (A-1) in stages in reactors, or the propylene homopolymer or ethylene-propylene random copolymer (A-1) and the ethylene-α-olefin rubber copolymer (A-2) may be separately polymerized and then mixed.

In the former, a polypropylene-based matrix of the propylene homopolymer or an ethylene-propylene random copolymer (A-1) may be first polymerized, followed by copolymerization of an ethylene-α-olefin rubber copolymer component to the polypropylene-based matrix. In such an event, the ethylene-α-olefin rubber copolymer (A-2) may be block-copolymerized to the propylene homopolymer or ethylene-propylene random copolymer (A-1), thereby producing a polypropylene-based block copolymer.

There is no particular limitation to the method for polymerizing the propylene homopolymer or ethylene-propylene random copolymer (A-1) and the ethylene-α-olefin rubber copolymer (A-2) in stages in reactors. Any method of preparing an ethylene-propylene block copolymer known in the art to which the present invention pertains may be used as it is or appropriately modified.

For example, the propylene homopolymer or ethylene-propylene random copolymer (A-1) and the ethylene-α-olefin rubber copolymer (A-2) may be polymerized in stages in reactors by a polymerization method known to those skilled in the art using Mitsui's Hypol process in which two bulk reactors and two gas-phase reactors are connected in series, and polymerization is continuously carried out therein.

In the latter, the ethylene-α-olefin rubber copolymer (A-2) separately polymerized or commercially obtained may be blended with the propylene homopolymer or ethylene-propylene random copolymer (A-1). There is no particular limitation to the method for blending the propylene homopolymer or ethylene-propylene random copolymer (A-1) and the ethylene-α-olefin rubber copolymer (A-2). Any blending method known in the art to which the present invention pertains may be used as it is or appropriately modified.

In the polyolefin resin composition according to an embodiment of the present invention, the base resin (A) comprises the ethylene-α-olefin rubber copolymer (A-2) in an amount of 10 to 40% by weight based on the total weight of components (A-1) and (A-2). If the content of the ethylene-α-olefin rubber copolymer (A-2) is less than 10% by weight, the dispersibility of a hydrated metal compound (B) added to the resin composition may be deteriorated. If the content of the ethylene-α-olefin rubber copolymer (A-2) exceeds 40% by weight, the thermal resistance of a molded article may be deteriorated.

Characteristics of the base resin (A)

In the polyolefin resin composition according to an embodiment of the present invention, the base resin (A) has a melting temperature (Tm) of 147 to 165°C. Preferably, the melting temperature (Tm) of the base resin (A) may be 148 to 155°C. If the melting temperature (Tm) of the base resin (A) is lower than 147°C, the thermal resistance of a molded article may be insufficient, so that the resin is deformed due to the high heat generated when the transmitted power is improved, which is not suitable for high-voltage power cables.

In the polyolefin resin composition according to an embodiment of the present invention, the base resin (A) has a melt index of 0.5 to 6.0 g/10 minutes when measured at 230°C under a load of 2.16 kg. Preferably, the melt index of the base resin (A) may be 0.8 to 5.0 g/10 minutes when measured at 230°C under a load of 2.16 kg. If the melt index of the base resin (A) is less than 0.5 g/10 minutes, the viscosity of a melt of the base resin (A) may be high, which makes difficult the mixing thereof, and the productivity may be decreased during wire processing. On the other hand, if the melt index of the base resin (A) exceeds 6.0 g/10 minutes, the viscosity of a melt of the base resin (A) is low, thereby causing a possibility that eccentricity may take place after wire processing.

In the polyolefin resin composition according to an embodiment of the present invention, when the base resin (A) is extracted at room temperature with a xylene solvent, the extract has an intrinsic viscosity of 1.5 to 4.0 dl/g. As used herein, the term *room temperature* refers to a temperature in the range of 20 to 25°C. Preferably, when the base resin (A) is extracted at room temperature with a xylene solvent, the intrinsic viscosity of the extract may be 2.0 to 3.3 dl/g. If the intrinsic viscosity of the solvent extract is less than 1.5 dl/g, a molded article is vulnerable to heat deformation. If the intrinsic viscosity of the solvent extract exceeds 4.0 dl/g, the processability of the resin composition is deteriorated, and stress whitening may take place in a molded article. Here, when the base resin (A) is extracted at room temperature with a xylene solvent, the solvent extract thus extracted may be substantially the same component as the ethylene-α-olefin rubber copolymer (A-2).

**(B) Hydrated metal compound**

The polyolefin resin composition according to an embodiment of the present invention comprises a hydrated metal compound (B). The hydrated metal compound (B) serves to enhance tracking inhibition characteristics and thermal resistance.

Examples of the hydrated metal compound include aluminum hydroxide ($Al(OH)_3$), magnesium hydroxide ($Mg(OH)_2$), and calcium hydroxide ($Ca(OH)_2$), but it is not particularly limited thereto. The hydrated metal compound may optionally have its surface treated with a polymer such as a silane. The hydrated metal compound whose surface has been treated with a silane polymer may enhance dispersibility by increasing the compatibility with the base resin (A).

The polyolefin resin composition according to an embodiment of the present invention comprises the hydrated metal compound (B) in an amount of 10 to 50 parts by weight relative to 100 parts by weight of the base resin (A). If the content of the hydrated metal compound (B) is less than 10 parts by weight, it is difficult to obtain sufficient tracking inhibition characteristics. On the other hand, if the content of the hydrated metal compound (B) exceeds 50 parts by weight, mechanical properties such as elongation of the resin composition may be deteriorated, and extrusion processability may be deteriorated as well.

**(C) Carbon black**

The polyolefin resin composition according to an embodiment of the present invention comprises carbon black (C). Carbon black (C) serves to enhance the long-term weatherability of a molded article.

Examples of carbon black (C) include acetylene black, thermal black, furnace black, and channel black, but it is not particularly limited thereto.

The polyolefin resin composition according to an embodiment of the present invention comprises carbon black (C) in an amount of 0.5 to 3.0 parts by weight relative to 100 parts by weight of the base resin (A). If the content of carbon black (C) is less than 0.5 part by weight, the UV blocking effect is insignificant, so that it is difficult to prevent the degradation of the polymer by UV rays. As a result, it may be difficult to secure the long-term weatherability of a molded article. On the other hand, if the content of carbon black (C) exceeds 3.0 parts by weight, the tracking resistance is rather deteriorated due to the conductivity of the carbon black (C), and the mechanical properties of a molded article may be deteriorated.

**(D) Additive**

The polyolefin resin composition according to an embodiment of the present invention may further comprise an additive (D) within a range that does not depart from the scope of the present invention. Specifically, the polyolefin resin composition according to an embodiment of the present invention may comprise the additive (D) in an amount of 0.3 to 3.0 parts by weight relative to 100 parts by weight of the base resin (A). If the content of the additive (D) is less than 0.3 part by weight, it is difficult to produce the effect of the additive. If it exceeds 3.0 parts by weight, the increase in the effect of the additive may be insignificant, while the economic feasibility of a product may be deteriorated.

For example, examples of the additive (D) include an antioxidant, a neutralizer, a UV stabilizer, a long-term heat stabilizer, a slip agent, an anti-blocking agent, a reinforcing agent, a filler, a weathering stabilizer, an antistatic agent, a lubricant, a nucleating agent, a pigment, and a dye, but it is not particularly limited thereto.

As a preferable embodiment, the polyolefin resin composition according to an embodiment of the present invention may further comprise an antioxidant. The antioxidant may be a phenolic antioxidant, a phosphite antioxidant, or the like. Specifically, it may comprise at least one antioxidant selected from the group consisting of tetrakis(methylene(3,5-di-t-butyl-4-hydroxy)hydrosilylnate), 1,3,5-trimethyl-tris(3,5-di-t-butyl-4-hydroxybenzyl)benzene, and tris(2,4-di-t-butylphenyl)phosphite, but it is not particularly limited thereto.

As a preferable embodiment, the polyolefin resin composition according to an embodiment of the present invention may further comprise a neutralizer. The neutralizer may comprise at least one selected from the group consisting of hydrotalcite and calcium stearate, but it is not particularly limited thereto.

Preparation of the polyolefin resin composition

There is no particular limitation to the method for preparing the polyolefin resin composite according to an embodiment of the present invention. Any blending method known in the technical field of the present invention may be used as it is or appropriately modified.

As a specific example, the resins, compounds, and additives described above are supplied to a mixer such as a kneader, a roll, and a Banbury mixer, or a single- or twin-screw extruder in predetermined amounts, and they are then blended with this apparatus, thereby preparing the polyolefin resin composition of the present invention.

Molded article

According to another embodiment of the present invention, there is provided a polyolefin resin article molded from the polyolefin resin composition.

There is no particular limitation to the method for preparing a molded article from the polyolefin resin composition according to an embodiment of the present invention. Any method known in the technical field of the present invention may be used. For example, the polyolefin resin composition according to an embodiment of the present invention may be molded by a conventional method such as injection molding, extrusion molding, casting molding, or the like to prepare a molded article of a polyolefin resin.

In a specific embodiment of the present invention, the polyolefin resin article may have a tracking generation time of 100 minutes or longer. Accordingly, the polyolefin resin article according to an embodiment of the present invention is suitable for a sheath layer of a high-voltage outdoor power cable. If the tracking generation time is shorter than 100 minutes, insulation breakdown or fire may take place when it is used as a sheath for power cables.

In a specific embodiment of the present invention, the polyolefin resin article may have an elongation of 300% or more. If the elongation of a molded article is less than 300%, a fracture may take place due to external stress such as bending, which is not preferable.

In a specific embodiment of the present invention, the polyolefin resin article may be a sheath layer of a high-voltage outdoor power cable.

Example

Hereinafter, the present invention is explained in detail by the following examples. However, the following examples are intended to further illustrate the present invention. The scope of the present invention is not limited thereto only.

Example 1

75 parts by weight of an ethylene-propylene random copolymer having an ethylene content of 1.8% by weight and 25 parts by weight of an ethylene-$\alpha$-olefin rubber copolymer were used as a base resin. Dry blended with 100 parts by weight of the base resin using a Henschel mixer (SSM-75) were 20 parts by weight of a hydrated metal compound (Kisuma-5B, Kyowa), 0.7 part by weight of carbon black (Raven UV Ultra, Birla Carbon), and a total of 0.3 part by weight of an antioxidant (Irganox1010, BASF) and a neutralizer (Songwon Industrial, SC- 110). It was then pelletized using a twin-screw extruder (SM PLATEK, TEK-30) at 200 to 230°C. It was melted at 180°C for 3 minutes and processed into a sheet of a desired thickness using an auto press of Carver.

Examples 2 and 3 and Comparative Examples 1 to 5

Compositions and specimens were each prepared in the same manner as in Example 1, except that the kind and content of the resins constituting the composition and the contents of the hydrated metal compound and carbon black were changed as shown in Tables 1 and 2 below.

Reference example

A low-density polyethylene resin (TR0825, Wiscom), which is commercially available for outdoor electric power cables, was melted at 180°C for 3 minutes and processed into a sheet of a desired thickness using an auto press of Carver.

Test Example

The physical properties of the base resins, compositions, and molded article specimens prepared in Examples 1 to 3 and Comparative Examples 1 to 5 were measured according to the following methods and standards. The results are shown in Tables 1 and 2.

(1) Melt index

The melt index of the base resin was measured at 230°C under a load of 2.16 kg according to the ASTM D 1238 method.

(2) Ethylene content (% by weight)

The content of ethylene in the ethylene-propylene random copolymer was measured from the peaks of 720 cm$^{-1}$ and 730 cm$^{-1}$ using Fourier transform infrared spectroscopy (FT-IR).

(3) Intrinsic viscosity of a solvent extract (xylene soluble)

The base resin was dissolved in xylene at a concentration of 1% by weight at 140°C for 1 hour and left at room temperature for 2 hours for extraction. The intrinsic viscosity of the solvent extract was measured in a decalin solvent at 135°C using a viscometer.

(4) Melting temperature

A sample was kept isothermal at 200°C for 10 minutes in a differential scanning calorimeter (DSC; Q2000, TA Instrument) to remove the thermal history and then cooled from 200°C to 30°C at a rate of 10°C per minute for crystallization thereof to impart the same thermal history. Then, the sample was kept isothermal at 30°C for 10 minutes, followed by heating the sample at a rate of 10°C per minute. The melting temperature (Tm) was obtained from the peak temperature.

(5) Tracking resistance

A flat specimen having a length of 12 cm or more, a width of 5 cm or less, and a thickness of 6 mm was prepared using an auto press of Carver. This specimen was mounted at an inclination angle of 45°. While a voltage of 4.5 kV was applied at an electrode spacing of 50 mm, a contaminant solution prepared by mixing 0.1% of ammonium chloride and 0.02% of a nonionic surfactant (Triton X-100) in distilled water was poured over the specimen at a flow rate of 0.6 ml per minute. The time (minutes) until tracking took place was measured. According to the KEPCO standard (ES-6145-0021), if tracking did not take place for 100 minutes, it was a pass; if tracking took place before 100 minutes, it was a failure.

(6) Elongation

A sheet having a thickness of 2 mm was prepared using an auto press of Carver, which was processed in accordance with ASTM D638 Type IV standard. The specimen was mounted on UTM equipment, and tensile properties were evaluated at room temperature at a rate of 50 mm/minute. The elongation was calculated by the following equation.

Elongation (%) = (gauge distance after tensioning - gauge distance before tensioning)/(gauge distance before tensioning) $\times$ 100

[Table 1]

| | | Example | | | Comp. Example |
|---|---|---|---|---|---|
| | | 1 | 2 | 3 | 1 |
| Constitution of the resin composition (% or part by weight) | (A-1) Propylene homopolymer or an ethylene-propylene random copolymer | 85 | 75 | 65 | 100 |
| | Ethylene content (% by weight) in component (A-1) | 1.8 | 1.9 | 1.9 | 3.5 |
| | (A-2) Ethylene-propylene rubber copolymer | 15 | 25 | 35 | 0 |
| | (B) Hydrated metal compound | 20 | 25 | 30 | 20 |
| | (C) Carbon black | 0.7 | 0.7 | 0.7 | 0.7 |
| Base resin properties | Melt index (g/10 min) | 1.9 | 2.0 | 2.3 | 7.2 |
| | Intrinsic viscosity of the solvent extract (dl/g) | 2.5 | 2.1 | 2.4 | 0.5 |
| | Melting temp. (Tm; °C) | 152 | 151 | 151 | 145 |
| Physical properties of the molded article | Elongation (%) | 310 | 420 | 310 | 40 |
| | Tracking resistance | Pass | Pass | Pass | Pass |

[Table 2]

| | | Comparative Example | | | |
|---|---|---|---|---|---|
| | | 2 | 3 | 4 | 5 |
| Constitution of the resin composition (% or part by weight) | (A-1) Propylene homopolymer or an ethylene-propylene random copolymer | 75 | 75 | 86 | 50 |
| | Ethylene content (% by weight) in component (A-1) | 3.4 | 3.5 | 2 | 1.8 |
| | (A-2) Ethylene-propylene rubber copolymer | 25 | 25 | 14 | 50 |
| | (B) Hydrated metal compound | 20 | 40 | 30 | 30 |
| | (C) Carbon black | 4.0 | 0.7 | 0.7 | 0.7 |
| Base resin properties | Melt index (g/10 min) | 7.0 | 7.2 | 6.0 | 2.5 |
| | Intrinsic viscosity of the solvent extract (dl/g) | 0.5 | 0.5 | 1.0 | 2.5 |
| | Melting temp. (Tm; °C) | 144 | 145 | 151 | 151 |
| Physical properties of the molded article | Elongation (%) | 350 | 35 | 30 | 500 |
| | Tracking resistance | Failure | Pass | Pass | Failure |

As can be seen from Tables 1 and 2 above, the resin compositions of the Examples falling within the scope of the present invention were excellent in thermal resistance of the base resins, and the elongation of the molded articles was excellent enough to be comparable to the elongation (350%) of the molded articles of the Reference Example. In addition, in the molded articles of the Examples, tracking did not take place as in the molded article of the Reference Example.

In Comparative Example 1, in which the ethylene content in the ethylene-propylene random copolymer was high, the thermal resistance of the base resin was not good, and the elongation was not good since an ethylene-propylene rubber copolymer was not employed.

In Comparative Example 2, in which the ethylene content in the ethylene-propylene random copolymer was high, the thermal resistance of the base resin was not good, and the tracking resistance was not good since the conductivity was high due to the high content of carbon black.

In Comparative Example 3, in which the ethylene content in the ethylene-propylene random copolymer was high, and the content of hydrated metal compound was relatively high, the elongation of the molded product was not good.

In Comparative Example 4, in which the content of the ethylene-propylene rubber copolymer was low relative to the content of the hydrated metal compound, the elongation of the molded product was not good.

In Comparative Example 5, in which the content of the ethylene-propylene rubber copolymer in the base resin was high, the tracking resistance was not good.

The polyolefin resin composition according to an embodiment of the present invention is excellent in thermal resistance, breakdown voltage, DC insulation, and mechanical properties. Accordingly, the polyolefin resin article prepared therefrom can be advantageously used as an insulation layer of a power cable.

## Reference Numerals of the Drawings

1: conductor, 2: inner semiconductive layer, 3: insulation layer, 4: sheath layer

## Claims

1.  A polyolefin resin composition, which comprises: (A) a base resin comprising, based on the total weight of components (A-1) and (A-2), (A-1) 60 to 90% by weight of a propylene homopolymer or an ethylene-propylene random copolymer; and (A-2) 10 to 40% by weight of an ethylene-$\alpha$-olefin rubber copolymer; and, relative to 100 parts by weight of the base resin (A), (B) 10 to 50 parts by weight of a hydrated metal compound; and (C) 0.5 to 3.0 parts by weight of carbon black, wherein the ethylene content in component (A-1) is 0 to 2.5% by weight, the base resin (A) has a melting temperature (Tm) of 147 to 165°C and a melt index of 0.5 to 6.0 g/10 minutes when measured at 230°C under a load of 2.16 kg, and when the base resin (A) is extracted at room temperature with a xylene solvent, the extract has an intrinsic viscosity of 1.5 to 4.0 dl/g.

2.  The polyolefin resin composition of claim 1, wherein the base resin (A) is obtained by polymerization of components (A-1) and (A-2) in stages in reactors or by separate polymerization and then mixing thereof.

3.  The polyolefin resin composition of claim 1 or 2, wherein the $\alpha$-olefin of component (A-2) has 3 to 8 carbon atoms.

4.  The polyolefin resin composition of claim 3, wherein the $\alpha$-olefin of component (A-2) comprises at least one selected from the group consisting of propylene, 1-butene, 1-hexene, and 1-octene.

5.  The polyolefin resin composition of any one of claims 1 to 4, wherein the melting temperature (Tm) of the base resin (A) is 148 to 155°C.

6.  The polyolefin resin composition of any one of claims 1 to 5, wherein the melt index of the base resin (A) is 0.8 to 5.0 g/10 minutes when measured at 230°C under a load of 2.16 kg.

7.  The polyolefin resin composition of any one of claims 1 to 6, wherein when the base resin (A) is extracted at room temperature with a xylene solvent, the intrinsic viscosity of the extract is 2.0 to 3.3 dl/g.

8.  The polyolefin resin composition of any one of claims 1 to 7, wherein the hydrated metal compound (B) comprises at least one selected from the group consisting of aluminum hydroxide ($Al(OH)_3$), magnesium hydroxide ($Mg(OH)_2$), and calcium hydroxide ($Ca(OH)_2$).

9.  The polyolefin resin composition of any one of claims 1 to 8, wherein the carbon black (C) comprises at least one selected from the group consisting of acetylene black, thermal black, furnace black, and channel black.

10. The polyolefin resin composition of any one of claims 1 to 9, which further comprises at least one additive (D) selected from the group consisting of an antioxidant, a neutralizer, a UV stabilizer, a long-term thermal stabilizer, a slip agent, an anti-blocking agent, a reinforcing agent, a filler, a weathering stabilizer, an antistatic agent, a lubricant, a nucleating agent, a pigment, and a dye.

11. The polyolefin resin composition of claim 10, wherein the additive (D) is added in an amount of 0.3 to 3.0 parts by weight relative to 100 parts by weight of the base resin (A).

12. A polyolefin resin article molded from the polyolefin resin composition according to any one of claims 1 to 11.

13. The polyolefin resin article of claim 12, which has a tracking generation time of 100 minutes or longer.

14. The polyolefin resin article of claim 12 or 13, which has an elongation of 300% or more.

15. The polyolefin resin article of any one of claims 12 to 14, which is a sheath layer of a high-voltage outdoor power cable.

**Patentansprüche**

1. Polyolefinharzzusammensetzung, die Folgendes umfasst: (A) ein Basisharz umfassend, auf Grundlage des Gesamtgewichts der Komponenten (A-1) und (A-2), (A-1) 60 bis 90 Gew.-% eines Propylenhomopolymers oder eines Ethylen-Propylen-Random-Copolymers; und (A-2) 10 bis 40 Gew.-% eines Ethylen-$\alpha$-Olefin-Kautschukcopolymers; und, bezogen auf 100 Gewichtsteile des Basisharzes (A), (B) 10 bis 50 Gewichtsteile einer hydratisierten Metallverbindung; und (C) 0,5 bis 3,0 Gewichtsteile Industrieruß, wobei der Ethylengehalt in Komponente (A-1) 0 bis 2,5 Gew.-% beträgt, das Basisharz (A) eine Schmelztemperatur (Tm) von 147 bis 165 °C und einen Schmelzindex von 0,5 bis 6,0 g/10 Minuten aufweist, wenn es bei 230 °C unter einer Last von 2,16 kg gemessen wird, und, wenn das Basisharz (A) bei Raumtemperatur mit einem Xylollösungsmittel extrahiert wird, der Extrakt eine Grenzviskosität von 1,5 bis 4,0 dl/g aufweist.

2. Polyolefinharzzusammensetzung nach Anspruch 1, wobei das Basisharz (A) durch Polymerisation der Komponenten (A-1) und (A-2) in Stufen in Reaktoren oder durch separate Polymerisation und anschließendes Mischen davon erhalten wird.

3. Polyolefinharzzusammensetzung nach Anspruch 1 oder 2, wobei das $\alpha$-Olefin von Komponente (A-2) 3 bis 8 Kohlenstoffatome aufweist.

4. Polyolefinharzzusammensetzung nach Anspruch 3, wobei das $\alpha$-Olefin von Komponente (A-2) mindestens eines umfasst, das aus der Gruppe ausgewählt ist, die aus Propylen, 1-Buten, 1-Hexen und 1-Octen besteht.

5. Polyolefinharzzusammensetzung nach einem der Ansprüche 1 bis 4, wobei die Schmelztemperatur (Tm) des Basisharzes (A) 148 bis 155 °C beträgt.

6. Polyolefinharzzusammensetzung nach einem der Ansprüche 1 bis 5, wobei der Schmelzindex des Basisharzes (A) 0,8 bis 5,0 g/10 Minuten beträgt, wenn es bei 230 °C unter einer Last von 2,16 kg gemessen wird.

7. Polyolefinharzzusammensetzung nach einem der Ansprüche 1 bis 6, wobei, wenn das Basisharz (A) bei Raumtemperatur mit einem Xylollösungsmittel extrahiert wird, die Grenzviskosität des Extrakts 2,0 bis 3,3 dl/g beträgt.

8. Polyolefinharzzusammensetzung nach einem der Ansprüche 1 bis 7, wobei die hydratisierte Metallverbindung (B) mindestens eines umfasst, das aus der Gruppe ausgewählt ist, die aus Aluminiumhydroxid (Al(OH)$_3$), Magnesiumhydroxid (Mg(OH)$_2$) und Calciumhydroxid (Ca(OH)$_2$) besteht.

9. Polyolefinharzzusammensetzung nach einem der Ansprüche 1 bis 8, wobei der Industrieruß (C) mindestens eines umfasst, das aus der Gruppe ausgewählt ist, die aus Acetylenruß, Thermalruß, Furnaceruß und Kanalruß besteht.

10. Polyolefinharzzusammensetzung nach einem der Ansprüche 1 bis 9, ferner umfassend mindestens ein Additiv (D), das aus der Gruppe ausgewählt ist, die aus einem Antioxidans, einem Neutralisator, einem UV-Stabilisator, einem thermischen Langzeitstabilisator, einem Gleitmittel, einem Antiblockiermittel, einem Verstärkungsmittel, einem Füllstoff, einem Witterungsstabilisator, einem Antistatikmittel, einem Schmiermittel, einem Nukleierungsmittel, einem Pigment und einem Farbstoff besteht.

**11.** Polyolefinharzzusammensetzung nach Anspruch 10, wobei das Additiv (D) in einer Menge von 0,3 bis 3,0 Gewichtsteilen bezogen auf 100 Gewichtsteile des Grundharzes (A) zugegeben wird.

**12.** Polyolefinharzartikel, geformt aus der Polyolefinharzzusammensetzung nach einem der Ansprüche 1 bis 11.

**13.** Polyolefinharzartikel nach Anspruch 12, der eine Kriechstromerzeugungszeit von 100 Minuten oder länger aufweist.

**14.** Polyolefinharzartikel nach Anspruch 12 oder 13, der eine Dehnung von 300 % oder mehr aufweist.

**15.** Polyolefinharzartikel nach einem der Ansprüche 12 bis 14, der eine Mantelschicht eines Hochspannungsaußenleistungskabels ist.


**Revendications**

**1.** Composition de résine de polyoléfine, qui comprend : (A) une résine de base comprenant, sur la base du poids total de composants (A-1) et (A-2), (A-1) 60 à 90 % en poids d'un homopolymère de propylène ou d'un copolymère aléatoire d'éthylène-propylène ; et (A-2) 10 à 40 % en poids d'un copolymère de caoutchouc d'éthylène-$\alpha$-oléfine ; et, par rapport à 100 parties en poids de la résine de base (A), (B) 10 à 50 parties en poids d'un composé métallique hydraté ; et (C) 0,5 à 3,0 parties en poids de noir de carbone, dans laquelle la teneur en éthylène dans le composant (A-1) est de 0 à 2,5 % en poids, la résine de base (A) présente une température de fusion (Tm) de 147 à 165 °C et un indice de fusion de 0,5 à 6,0 g/10 minutes lorsqu'il est mesuré à 230 °C sous une charge de 2,16 kg, et lorsque la résine de base (A) est extraite à température ambiante avec un solvant de xylène, l'extrait possède une viscosité intrinsèque de 1,5 à 4,0 dl/g.

**2.** Composition de résine de polyoléfine de la revendication 1, dans laquelle la résine de base (A) est obtenue par polymérisation de composants (A-1) et (A-2) par étapes dans des réacteurs ou par polymérisation séparée, puis par mélange de ceux-ci.

**3.** Composition de résine de polyoléfine de l'une des revendications 1 ou 2, dans laquelle l'$\alpha$-oléfine du composant (A-2) possède 3 à 8 atomes de carbone.

**4.** Composition de résine de polyoléfine de la revendication 3, dans laquelle l'$\alpha$-oléfine du composant (A-2) comprend au moins l'un choisi dans le groupe constitué du propylène, du 1-butène, du 1-hexène et du 1-octène.

**5.** Composition de résine de polyoléfine de l'une quelconque des revendications 1 à 4, dans laquelle la température de fusion (Tm) de la résine de base (A) est de 148 à 155 °C.

**6.** Composition de résine de polyoléfine de l'une quelconque des revendications 1 à 5, dans laquelle l'indice de fusion de la résine de base (A) est de 0,8 à 5,0 g/10 minutes lorsqu'il est mesuré à 230 °C sous une charge de 2,16 kg.

**7.** Composition de résine de polyoléfine de l'une quelconque des revendications 1 à 6, dans laquelle lorsque la résine de base (A) est extraite à température ambiante avec un solvant de xylène, la viscosité intrinsèque de l'extrait est de 2,0 à 3,3 dl/g.

**8.** Composition de résine de polyoléfine de l'une quelconque des revendications 1 à 7, dans laquelle le composé métallique hydraté (B) comprend au moins l'un choisi dans le groupe constitué par l'hydroxyde d'aluminium (Al(OH)$_3$), l'hydroxyde de magnésium (Mg(OH)$_2$) et l'hydroxyde de calcium (Ca(OH)$_2$).

**9.** Composition de résine de polyoléfine de l'une quelconque des revendications 1 à 8, dans laquelle le noir de carbone (C) comprend au moins l'un choisi dans le groupe constitué par le noir d'acétylène, le noir thermique, le noir de fourneau et le noir de tunnel.

10. Composition de résine de polyoléfine de l'une quelconque des revendications 1 à 9, qui comprend en outre au moins un additif (D) choisi dans le groupe constitué par un antioxydant, un neutralisant, un stabilisateur UV, un stabilisateur thermique à long terme, un agent glissant, un agent anti-bloquant, un agent de renforcement, une charge, un stabilisateur de vieillissement, un agent antistatique, un lubrifiant, un agent de nucléation, un pigment et un colorant.

11. Composition de résine de polyoléfine de la revendication 10, dans laquelle l'additif (D) est ajouté en une quantité de 0,3 à 3,0 parties en poids par rapport à 100 parties en poids de la résine de base (A).

12. Article en résine de polyoléfine moulé à partir de la composition de résine de polyoléfine selon l'une quelconque des revendications 1 à 11.

13. Article en résine de polyoléfine de la revendication 12, qui a un temps de génération de cheminement de 100 minutes ou plus.

14. Article en résine de polyoléfine de l'une des revendications 12 ou 13, qui présente un allongement de 300 % ou plus.

15. Article en résine de polyoléfine de l'une quelconque des revendications 12 à 14, qui est une couche de gaine d'un câble d'alimentation extérieur haute tension.

[Fig. 1]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• ES 61450021